(19) Europäisches Patentamt
European Patent Office
Office européen des brevets

(11) Numéro de publication: **0 090 744**
**B1**

(12) **FASCICULE DE BREVET EUROPÉEN**

(45) Date de publication du fascicule du brevet: **03.09.86**

(51) Int. Cl.⁴: **B 23 D 45/08,** B 23 D 45/12

(21) Numéro de dépôt: **83420027.1**

(22) Date de dépôt: **24.02.83**

(54) **Machine à scie annulaire pour le tronçonnage de tubes.**

(30) Priorité: **01.03.82 FR 8203648**

(43) Date de publication de la demande: **05.10.83 Bulletin 83/40**

(45) Mention de la délivrance du brevet: **03.09.86 Bulletin 86/36**

(84) Etats contractants désignés: **AT BE CH DE GB IT LI NL SE**

(56) Documents cité:
**CH-A-359 875**
**DE-B-2 559 824**
**FR-A-2 388 625**
**GB-A-905 261**
**US-A-4 116 095**

(73) Titulaire: **CHAUDRONNERIE DE GIERES Société à Responsabilité Limitée dite, Zone Industrielles Les Bauches, F-38640 Claix (FR)**

(72) Inventeur: **Davis, Jean Claude, La Côte Chemin du Palais, Meximieux (Ain) (FR)**

(74) Mandataire: **Maureau, Pierre, Cabinet GERMAIN & MAUREAU Le Britannia - Tour C 20, Boulevard E. Déruelle, F-69003 Lyon (FR)**

EP 0 090 744 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1986

**Description**

La présente invention concerne une machine à scie annulaire pour le tronçonnage de tubes.

Cette machine comprend, de façon connue, une scie annulaire formée par une couronne à denture intérieure apte à être traversée par le tube à sectionner, dont elle peut être rapprochée ou éloignée, des moyens avec moteur et réducteur pour l'entraînement en rotation de ladite scie annulaire autour de son propre axe et des moyens faisant décrire à ladite scie annulaire un mouvement de "satellite" autour du tube à sectionner, la scie annulaire avec son moteur et son réducteur d'entraînement en rotation autour de son propre axe étant montée mobile dans son plan, par l'intermédiaire de moyens de guidage, sur un bâti lui-même déplaçable linéairement, sous l'action de moyens de commande de manière à rapprocher ou éloigner la denture de la scie annulaire et le tube a sectionner, ledit bâti portant au moins un moto-réducteur entraînant en rotation au moins un maneton réglable, dont un point éloigné de son axe de rotation est accouplé à l'ensemble mobile comprenant la scie annulaire, son moteur et son réducteur d'entraînement en rotation autour de son propre axe.

Une telle machine, décrite dans le document FR-A-2 388 625, permet de tronçonner des tubes ayant un diamètre important, en utilisant une lame annulaire dont les éléments de coupe conservent une hauteur très faible, cette lame étant animée d'un double mouvement de rotation autour de son propre axe et de satellite autour du tube à sectionner, de sorte que la paroi du tube est entierement coupée lorsque la scie a décrit une "révolution' complète autour du tube.

Toutefois, la réalisation particulière décrite dans le document ci-dessus mentionné ne donne pas satisfaction sur le plan du fonctionnement:

a) pour l'obtention du mouvement dit de satellite, l'ensemble constitué par la scie annulaire, son moteur d'entraînement et le réducteur indispensable est porté par un bâti, lequel est lié à un support par l'intermédiaire de deux manetons parallèles; les deux manetons sont entraînés en rotation simultanément de manière à faire décrire au bâti précité un mouvement circulaire dans un plan vertical. Ce mécanisme rend le réglage et la synchronisation très difficiles. De plus il manque de rigidité et ne peut assurer un guidage précis du bâti dans son mouvement circulaire. Le mouvement de satellite est donc irrégulier.

b) pour l'obtention du mouvement d'approche vers le tube à tronçonner, le support est lui-même articulé latéralement sur une chape, autour d'un axe horizontal, et il peut ainsi décrire un mouvement pendulaire commandé au moyen d'un vérin hydraulique. Ce mouvement autorise l'introduction du tube à sectionner et son dégagement après tronçonnage, mais il permet surtout d'amorcer le sciage en faisant pénétrer la denture de la scie annulaire dans la paroi du tube pour réaliser un "crevé". Au moment de la réalisation du crevé le mouvement pendulaire de l'ensemble mobile désaxe la scie par rapport au tube; il en découle que le chanfrein, très généralement prévu lors du tronçonnage de tubes, n'a plus de concentricité, et même que ce chanfrein est inexistant sur une partie de la circonférence.

La présente invention remédie à ces inconvénients, en fournissant un agencement nouveau de machine à scie annulaire pour le tronçonnage de tubes qui:

- assure un guidage parfait du mouvement de satellite de la scie annulaire;
- permet un réglage aisé de la trajectoire de cette scie annulaire en fonction du diamètre des tubes à sectionner; et
- permet un chanfreinage précis en angle et en profondeur, grâce à une exécution précise du crevé initial.

A cet effet, dans la machine à scie annulaire pour le tronçonnage de tubes selon l'invention, il est prévu, pour le guidage dans son plan de l'ensemble précité comprenant la scie annulaire, son moteur et son réducteur d'entraînement en rotation autour de son propre axe, des premiers moyens de guidage suivant une direction déterminée et des seconds moyens de guidage suivant une direction perpendiculaire à la précédente, et il est prévu un seul moto-réducteur associé à un maneton unique, pour rendre l'ensemble précité mobile suivant ces deux directions perpendiculaires.

Ainsi, le mouvement de satellite de la scie est parfaitement guidé par une sorte de "table à mouvements croisés", avec des guides perpendiculaires par exemple horizontaux et verticaux correspondant aux deux composantes de ce mouvement circulaire, et la commande du mouvement en question est assurée simplement à partir d'un seul motoréducteur électrique ou hydraulique et par l'intermédiaire d'un maneton unique, facilement réglable en fonction du diamètre des tubes à sectionner et à chanfreiner.

Suivant une forme de réalisation particulière, l'ensemble mobile comprenant la scie annulaire son moteur et son réducteur d'entraînement en rotation autour de son propre axe est monté coulissant, par l'intermédiaire de paliers avec douilles à billes, sur deux colonnes horizontales dont les extrémités sont elles-mêmes montées coulissantes, par l'intermédiaire d'autres paliers avec douilles à billes, sur deux colonnes verticales, portées latéralement par le bâti qui porte le moto-réducteur entraînant en rotation le maneton réglable ce bâti étant lui-même déplaçable verticalement pour rapprocher ou éloigner la denture de la scie annulaire et le tube à sectionner.

Les moyens de commande du déplacement linéaire de ce bâti comprennent, avantageusement, un vérin vertical situé sur un côté de la machine, dont la tige est accouplée, par l'intermédiaire d'un levier monté pivotant sur un axe horizontal fixe, à une biellette elle-même articulée audit bâti, le levier coopérant avec une butée mécanique réglable. Ces moyens permettent de commander le mouvement réalisant le crevé avec précision et d'une maniere permettant, ensuite, la réalisation d'un chanfrein respectant des tolérances imposées d'angle et de profondeur. De plus, la combinaison de la butée mécanique réglable et du maneton réglable permettent de réaliser le crevé à un niveau constant sur la génératrice inférieure du tube à sectionner, quel que soit le diamètre du tube; ceci évite d'avoir à régler la hauteur de la partie d'amenage à l'entrée et à la sortie de la machine la niveau inférieur des tubes étant constant quel que soit leur diamètre. Cette disposition évite aussi un trop grand déplacement du maneton, et offre une capacité supérieure pour un même diamètre de la scie annulaire.

De toute façon, l'invention sera bien comprise à l'aide de la description qui suit, en référence au dessin schématique annexé représentant, à titre d'exemple non limitatif, une forme de réalisation de cette machine à scie annulaire pour le tronçonnage de tubes, et illustrant son fonctionnement:

Figure 1 est une vue de face très schématique de la machine, la scie annulaire occupant sa position initiale permettant l'amenage d'un tube à sectionner;

Figure 2 est une vue similaire à figure 1, dans une position où la scie annulaire vient d'être amenée au contact du tube à sectionner pour réaliser le crevé;

Figures 3 à 6 sont d'autres vues similaires aux précédentes, montrant la scie annulaire dans diverses positions successives de son mouvement de satellite autour du tube à sectionner;

Figure 7 est une dernière vue similaire aux précédentes, montrant la scie annulaire dégagée du tube entièrement sectionné, le machine étant prête pour le départ d'un autre cycle.

La machine représentée au dessin comprend un bâti en forme de cadre rectangulaire 1, situé dans un plan vertical et déplaçable suivant son axe vertical, sous l'action de moyens de commande désignés dans leur ensemble par le repère 2. Les montants latéraux 3 du bâti 1 portent des colonnes de guidage cylindriques verticales 4, sur chacune desquelles coulissent deux paliers avec douilles à billes 5 et 6. Les deux paliers supérieurs 5 sont reliés par une première colonne de guidage cylindrique horizontale 7, tandis que les deux paliers inférieurs 6 sont reliés par une seconde colonne de guidage cylindrique horizontale 8. Les deux dernières colonnes 7 et 8 assurent, par l'intermédiaire de paliers avec douilles à billes 9, le guidage en coulissement horizontal d'un ensemble mobile 10, comprenant un moteur électrique ou hydraulique 11, un réducteur à arbre creux 12 et la scie annulaire 13, le moteur 11 et le réducteur 12 assurant l'entraînement en rotation de la scie annulaire autour de son propre axe 14.

La traverse supérieure 15 du bâti 1 supporte un motoréducteur électrique ou hydraulique 16, dont l'arbre de sortie horizontal 17 porte un maneton réglable 18. L'axe excentré 19 de ce maneton 18 est lié à une pièce d'entraînement 20 solidaire de l'ensemble mobile 10 comprenant le moteur 11, le réducteur 12 et la scie annulaire 13.

Les moyens de commande 2 du déplacement vertical du bâti 1 comprennent ici un vérin hydraulique 21 d'axe vertical, situé sur un côté de la machine et ayant sa tige 22 accouplée à une extrémité d'un levier 23 monté pivotant, en son milieu, sur un axe horizontal fixe 24 situé dans la partie inférieure de la machine. L'autre extrémité du levier 23, située sensiblement dans l'axe vertical de la machine, est accouplée à une biellette 25 elle-même articulée à la traverse inférieure 26 du bâti 1. Les moyens de commande 2 sont complétés par une butée mécanique 27, coopérant avec le levier 23, cette butée 27 étant réglable verticalement par un moto-réducteur du type "pas à pas" 28 qui, par l'intermédiaire d'un mécanisme vis-écrou 29 et d'un coulisseau en forme de coin 30, permet de lever ou d'abaisser la butée 27.

La scie annulaire 13 comprend des éléments de coupe concaves, disposés en couronne pour constituer une denture intérieure celle-ci ayant le profil des fraises-scies traditionnelles réalisant la coupe et le chanfreinage. Selon la vitesse et la puissance données au moteur 11 et au réducteur 12, la denture de la scie annulaire 13 est réalisable en acier rapide, en acier au carbure monobloc, à segments diamantés, à segments céramique pour les très gros diamètres, et enfin selon la technique de la "scie-fusion" (coupe par fusion du matériau, à une grande vitesse de rotation). Les éléments de coupe sont avantageusement fixés non pas directement, mais par l'intermédiaire de deux contrebrides (principe des outils "sandwich").

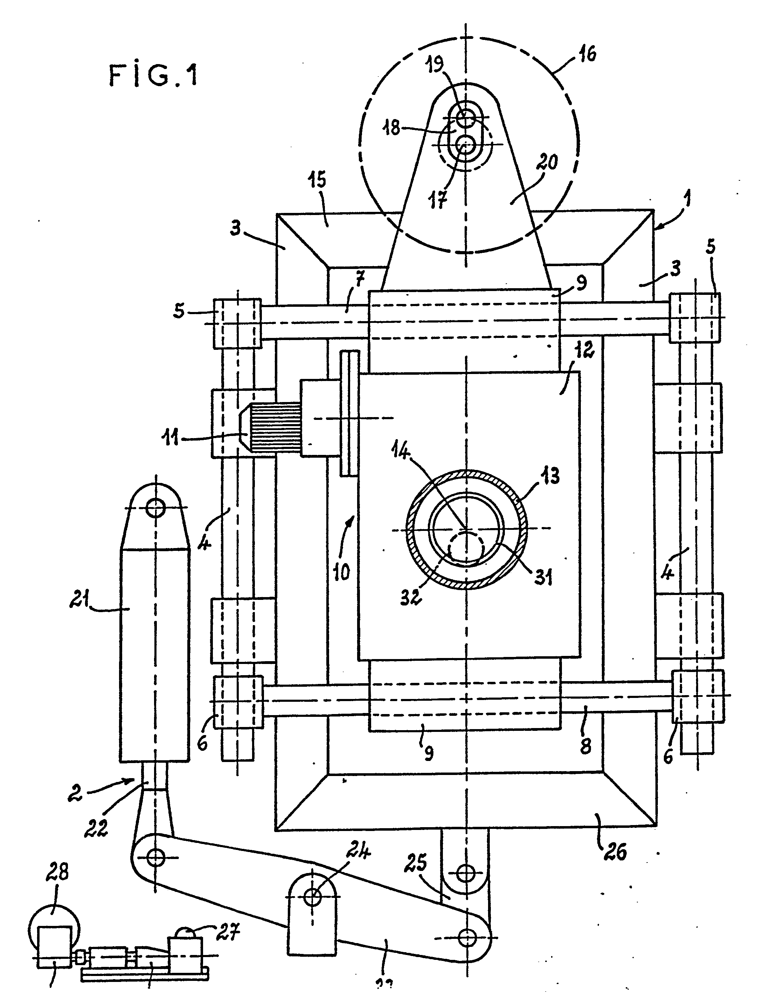

Au départ d'un cycle de fonctionnement, le bâti 1 occupe sa position la plus basse; le tube à sectionner 31 est placé horizontalement de manière à traverser librement la scie annulaire 13, la génératrice inférieure du tube 31 étant située à une hauteur prédéterminée. Ce tube est, bien entendu, maintenu fermement dans sa position par des étaux non représentés, serrés de part et d'autre du bâti 1 (voir figure 1).

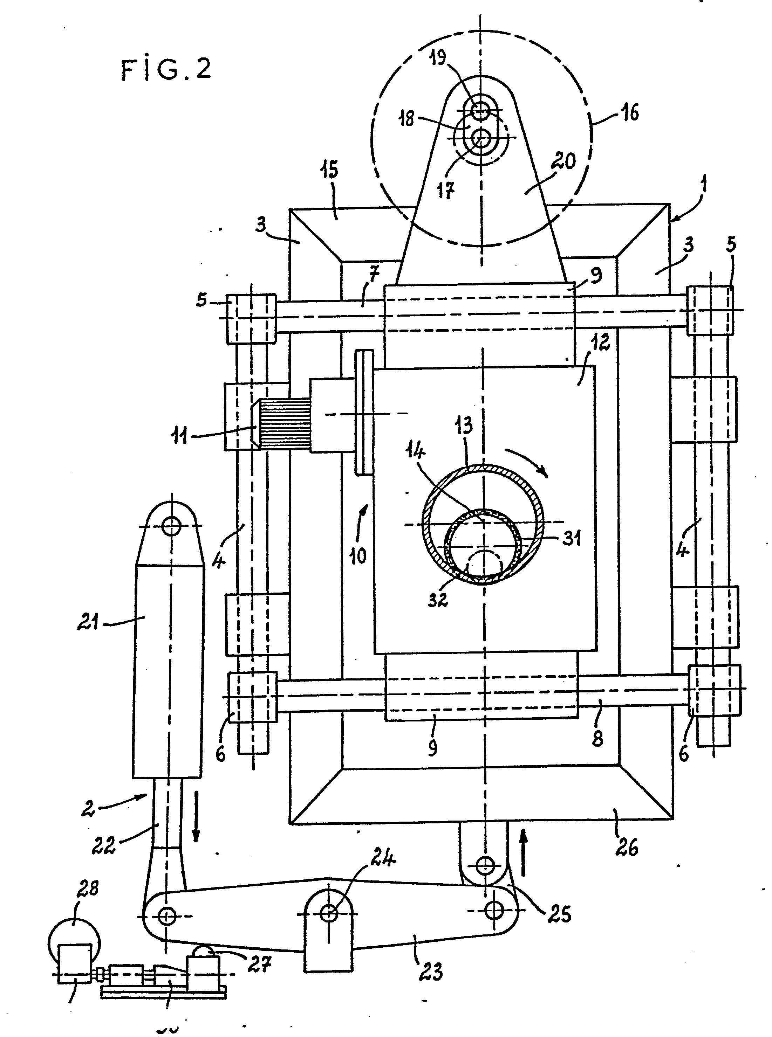

Après mise en place du tube 31, le vérin 21 est actionné de manière à faire pivoter le levier 23 autour de son axe 24 et à commander ainsi, par l'intermédiaire de la biellette 25, la montée verticale du bâti 1. Simultanément, le moteur 11 est mis en marche, de manière à entraîner en rotation la scie annulaire 13 autour de son axe 14. A la fin du mouvement de montée du bâti 1, la denture de la scie annulaire 13 pénètre dans la paroi du tube 31, au niveau de la génératrice inférieure de ce dernier, pour exécuter le crevé. La butée mécanique 27, convenablement réglée, limite le mouvement de montée du bâti 1 (voir figure 2).

Après la réalisation du crevé, le moto-réducteur 16 est aussi mis en marche, de manière à entraîner en rotation le maneton 18. L'axe excentré 19 commence alors à décrire un mouvement circulaire dans un plan vertical, qui est communiqué à la pièce d'entraînement 20, donc à tout l'ensemble mobile 10 et en particulier à la scie annulaire 13. Le mouvement circulaire de l'ensemble mobile 10 est guidé par les colonnes 7 et 8, en ce qui concerne sa composante horizontale, et par les colonnes 4, en ce qui concerne sa composante verticale.

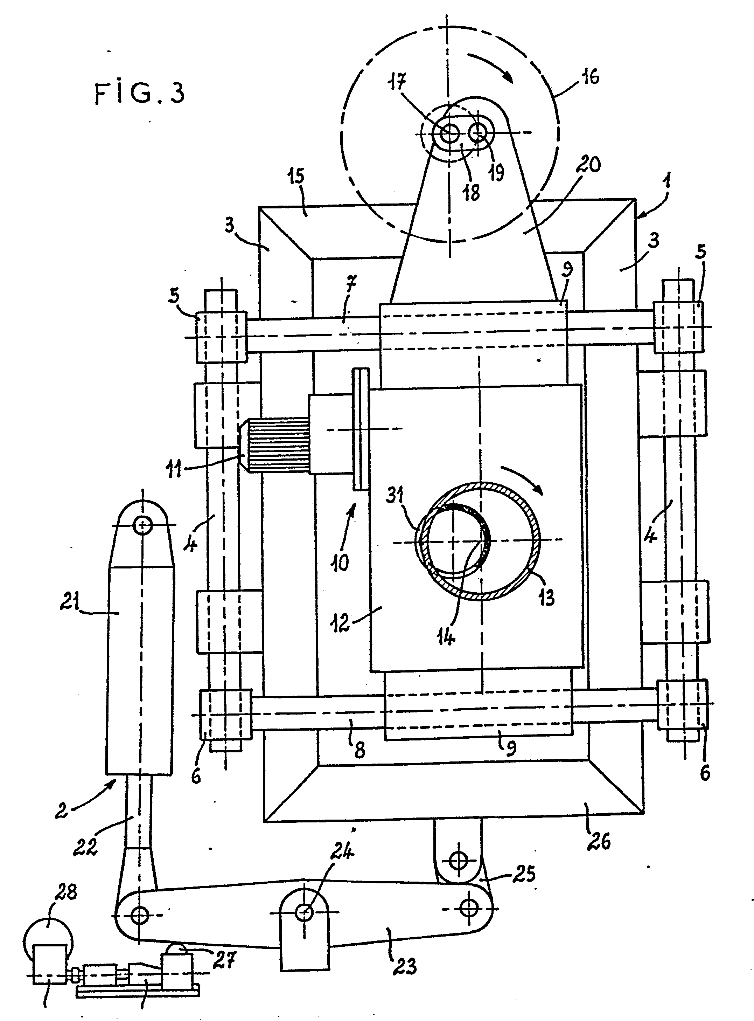

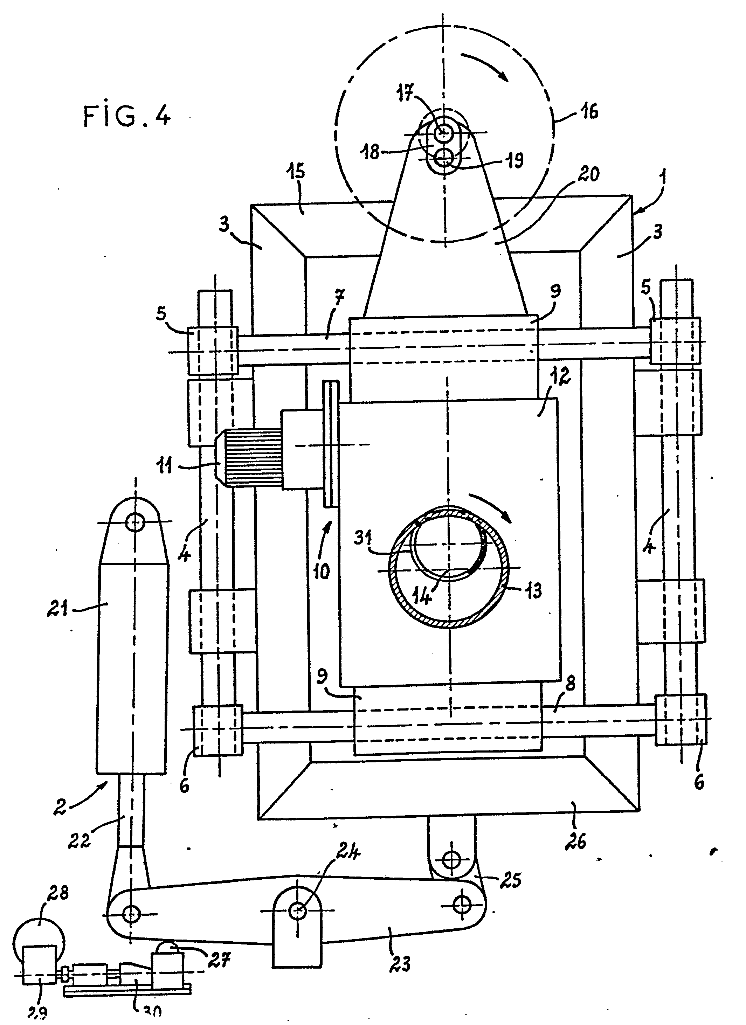

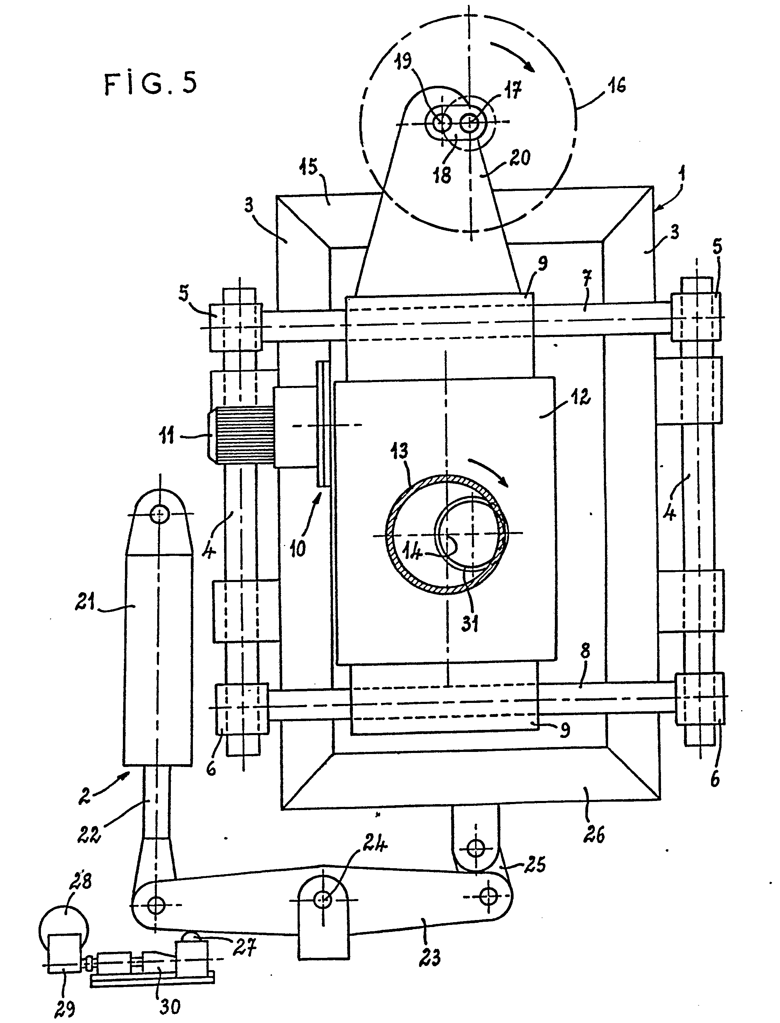

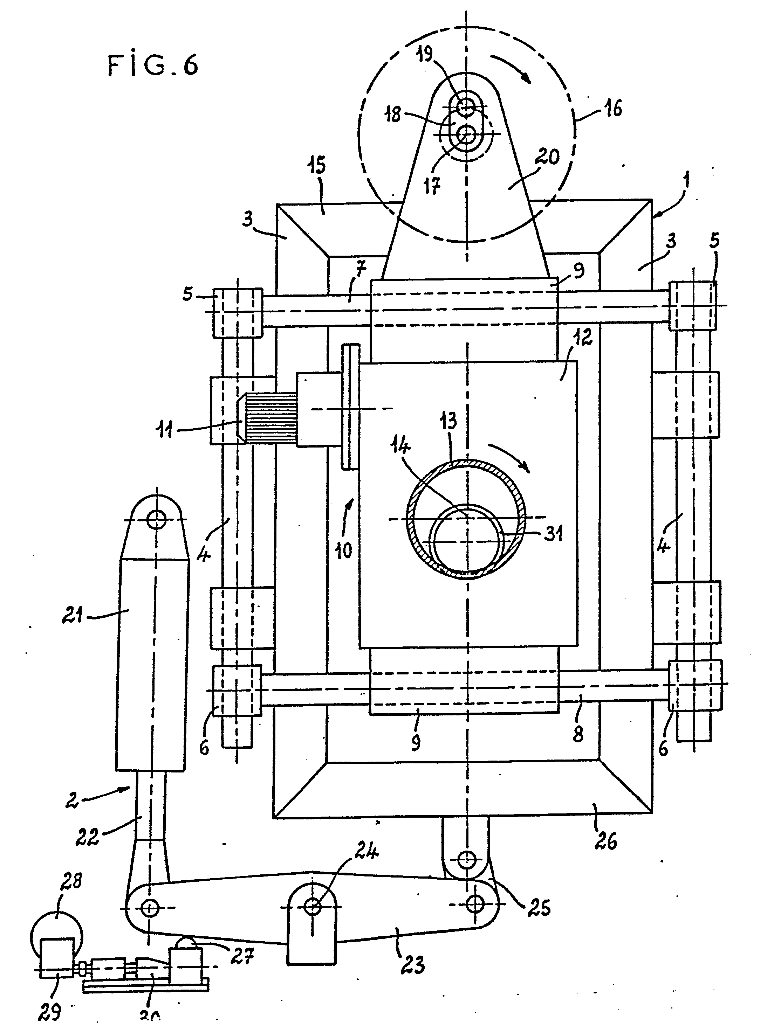

La scie annulaire 13 décrit ainsi un double mouvement de rotation autour de son propre axe 14, et de satellite autour du tube 31. Les figures 3, 4, 5 et 6 montrent les rotations respectives de 90°, 180°, 270° et 360° de la biellette 18, à partir de la position initiale selon la figure 2. Au cours de ce mouvement, la scie annulaire 13 pénètre en permanence dans la paroi du tube 31 qui est progressivement sectionnée. Lorsque la scie annulaire 13 aura décrit une révolution complète autour du tube 31 et sera revenue à sa position de départ (comparer les figures 2 et 6), une saignée sera faite sur toute la circonférence du tube 31 et la coupe ainsi que le chanfreinage seront terminés.

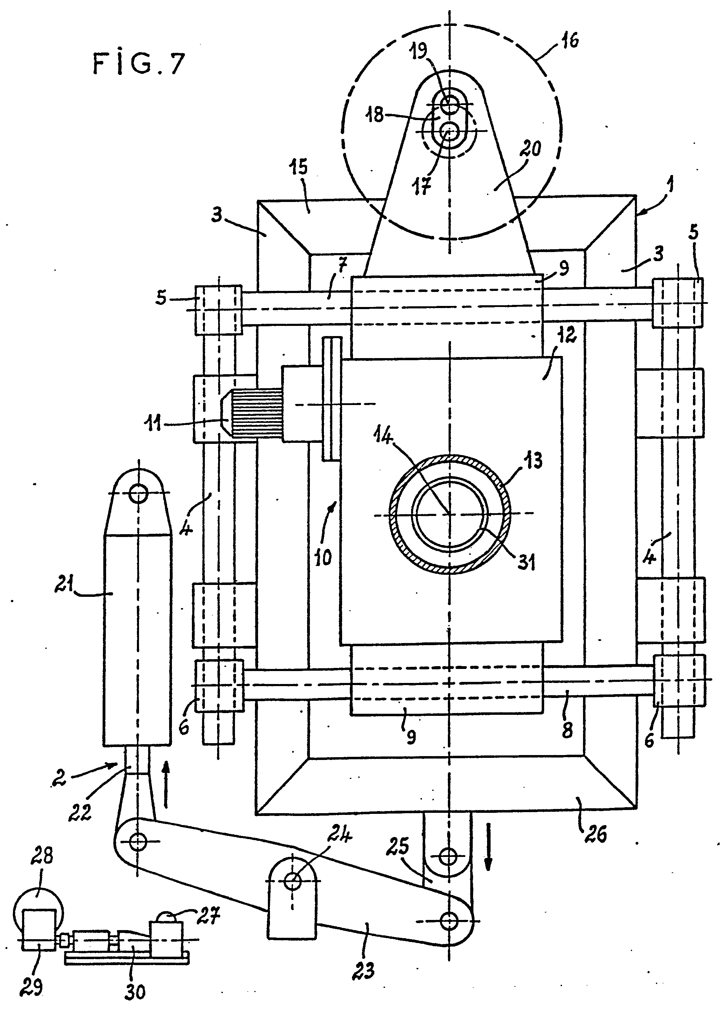

Le tube 31 étant sectionné, le vérin 21 est actionné de manière à commander la descente du bâti 1. La denture de la scie annulaire 13 est ainsi dégagée des deux tronçons du tube 31; l'un de ces tronçons peut alors être évacué, tandis que l'autre est avancé pour être lui-même sectionné. La machine se trouve désormais prête pour le départ d'un nouveau cycle (voir figure 7).

Le maneton 18 et la butée mécanique 27 initialement réglés, en fonction du diamètre du tube à tronçonner. Les réglages sont effectués en respectant un niveau constant pour la génératrice inférieure des tubes, donc pour la hauteur de l'amenage des tubes, ce qui est clairement illustré, sur les figures 1 et 2 où est indiqué sommairement la position donnée à un autre tube 32, de diamètre plus petit que le tube 31 précédemment considéré.

Selon le diamètre des tubes, leur épaisseur et la dureté de leur matériau constitutif, on pourra aussi être amené à régler la vitesse de rotation de la scie annulaire 13 autour de son axe 14, ainsi que la vitesse avec laquelle ladite scie annulaire décrit son mouvement de satellite. Dans ce but, des variateurs de vitesse électroniques sont avantageusement associés, d'une part, au moteur 11 qui entraîne la scie 13 en rotation par l'intermédiaire du réducteur 12 et, d'autre part, au moto-réducteur 16 permettans d'obtenir le mouvement de satellite.

Comme il va de soi, l'invention ne se limite pas à la seule forme de réalisation de cette machine à scie annulaire pour le tronçonnage de tubes qui a été décrite ci-dessus, à titre d'exemple; elle en embrasse au contraire, toutes les variantes comportant des moyens équivalents. C'est ainsi, notamment, que l'on ne s'éloignerait pas du cadre de l'invention en utilisant d'autres types de moteurs pour l'obtention des deux mouvements fondamentaux de la scie annulaire, en modifiant le détail des moyens de guidage suivant deux directions perpendiculaires de l'ensemble mobile comprenant la scie annulaire et ses moyens d'entraînement, ou en donnant une réalisatîon différente aux moyens de commande et de réglage du déplacement linéaire de bâti.

**Revendications**

1. Machine à scie annulaire pour le tronçonnage de tubes, comprenant une scie annulaire (13) formée par une couronne à denture intérieure apte à être traversée par le tube à sectionner (31) dont elle peut être rapprochée ou éloignée, des moyens avec moteur (11) et réducteur (12) pour l'entraînement en rotation de ladite scie annulaire (13) autour de son propre axe (14) et des moyens faisant décrire à ladite scie annulaire (13) un mouvement de "satellite" autour du tube à sectionner (31), la scie annulaire (13) avec son moteur (11) et son réducteur (12) d'entraînement en rotation autour de son propre axe (14) étant montée mobile dans son plan, par l'intermédiaire de moyens de guidage (4 à 9) sur un bâti (1) lui-même déplaçable linéairement, sous l'action de moyens de commande (2) de manière à rapprocher ou éloigner la denture de la scie annulaire (13) et le tube à sectionner (31), ledit bâti (1) portant au moins un moto-réducteur (16) entraînant en rotation au moins un maneton réglable (18), dont un point (19) éloigné de son axe de rotation (17) est accouplé à l'ensemble (10) mobile comprenant la scie annulaire (13), son moteur (11) et son réducteur (12) d'entraînement en rotation autour de son propre axe (14) caractérisée en ce que sont prévus, pour le guidage dans son plan de l'ensemble (10) précité, des premiers moyens de guidage (4, 5, 6) suivant une direction déterminée et des seconds moyens de guidage (7,5,9) suivant une direction perpendiculaire à la précédente, et en ce qu'il est prévu un seul motoréducteur (16) associé à un maneton (19) pour rendre l'ensemble (10) mobile suivant ces deux directions perpendiculaires entre elles.

2. Machine à scie annulaire pour le tronçonnage de tubes selon la revendication 1, caractérisée en ce que l'ensemble mobile (10) comprenant la scie annulaire (13), son moteur (11) et son réducteur (12) d'entraînement en rotation autour de son propre axe (14) est monté coulissant, par l'intermédiaire de paliers avec douilles à billes (9), sur deux colonnes horizontales (7, 8) dont les extrémités sont elles-mâmes montées coulissantes, par l'intermédiaire d'autres paliers avec douilles à billes (5, 6), sur deux colonnes verticales (4), portées latéralement par le bâti (1) qui porte le moto-réducteur (16) entraînant en rotation le maneton reglable (18), ce bâti (1) étant lui-même déplaçable verticalement pour rapprocher ou éloigner la denture de la scie annulaire (13) et le tube à sectionner (31).

3. - Machine à scie annulaire pour le tronçonnage de tubes selon la revendication 2, caractérisée en ce que les moyens de commande (2) du déplacement linéaire du bâti (1) comprennent un vérin vertical (21), situé sur un côté de la machine, dont la tige (22) est accouplée, par l'intermédiaire d'un levier (23) monté pivotant sur un axe horizontal fixe (24), à une biellette (25) elle-même articulée audit bâti (1), le levier (23) coopérant avec une butée mécanique réglable (27).

4. - Machine à scie annulaire pour le tronçonnage de tubes selon la revendication 3, caractérisée en ce que la butée mécanique (27) est réglable par un motoréducteur du type "pas à pas" (28) agissant sur ladite butée par l'intermédiaire d'un mécanisme vis-écrou (29) et d'un coulisseau en forme de coin (30).

5. - Machine à scie annulaire pour le tronçonnage de tubes selon la revendication 3 ou 4, caractérisée en ce que la génératrice inférieure du tube à sectionner (31, 32) est située à un niveau constant, quel que soit le diamètre de ce tube, le maneton (18) et la butée mécanique (27) étant réglés en conséquence.

**Patentansprüche**

1. Maschine mit ringförmiger Säge zum Trennen von Rohren, beinhaltend eine ringförmige Säge (13), gebildet durch einen Kranz mit Innenzahnung, der von dem zu zertrennenden Rohr (31) durchquert werden kann und an das er angenähert oder von ihm entfernt werden kann. Mittel zum Durehantrieb der genannten ringförmigen Säge (13) um ihre eigene Achse (14), mit einem Motor (11) und einem Untersetzer (12), und Mittel, die die genannte ringförmige Säge (13) eine Satellitenbewegung um das zu zertrennende Rohr (31) herum beschreiben lassen, wobei die ringförmige Säge (13) mit ihrem Motor (11) und ihrem Untersetzer (12) für die Drehbewegung um ihre eigene Achse (14) in ihrer Ebene beweglich montiert ist, mit Hilfe von Führungsmitteln (4 - 9) auf einem Gestell (1), das selbst linear verlagerbar unter der Wirkung von Betätigungsmitteln (2) ist derart, daß die Zähnung der ringförmigen Säge (13) und das zu zertrennende Rohr (31) aneinander angenähert oder voneinander entfernt werden, wobei das genannte Gestell (1) mindestens einen Getriebemotor (16) trägt, der mindestens einen einstellbaren Kurbelzapfen (18) drehend antreibt, von dem ein Punkt (19), der entfernt zu seiner Drehachse (17) liegt, an die bewegliche Baugesamtheit (10) angekuppelt ist, die die ringförmige Säge (13), ihren Motor und ihren Untersetzer (12) für die Drehbewegung um ihre eigene Ache (14) beinhaltet, dadurch gekennzeichnet, daß für die Führung der genannten Saugesamtheit (10) in ihrer Ebene erste Führungsmittel (4, 5, 6) gemäß einer vorbestimmten Richtung und zweite Führungsmittel (7, 8, 9) gemäß einer Richtung senkrecht zur erstgenannten, vorgesehen sind und daß ein einziger Getriebemotor (16) vorgesehen ist, der einem Kurbelzapfen (19) zugeordnet ist, um die Baugesamtheit (10) gemäß der beiden zueinander senkrechten Richtungen bewegbar zu machen.

2. Maschine mit ringförmiger Säge zum Trennen von Rohren nach Anspruch 1, dadurch gekennzeichnet, daß die bewegliche Baugesamtheit (10), beinhaltend die ringförmige Säge (13), ihren Motor (11) und ihren Untersetzer (12) für die Drehbewegung um ihre eigene Achse (14) gleitend mittels Lagern mit Kugelbuchsen (19) auf zwei horizontalen Säulen (7, 8) gelagert ist, deren Ende ihrerseits gleitend mittels anderer Lager mit Kugelbuchsen (5, 6) auf zwei vertikalen Säulen (4) gelagert sind. die seitlich von dem Gestell (1) getragen werden, das den Getriebemotor (16) trägt, der den einstellbaren Kurbelzapfen (18) drehend antreibt, wobei dieses Gestell (1) seinerseits vertikal verlagerbar ist, um die Zähnung der ringförmigen Säge (13) und das zu zertrennende Rohr (14) aneinander anzunähern oder voneinander zu entfernen.

3. Maschine mit ringförmiger Säge zum Trennen von Rohren nach Anspruch 2. dadurch gekennzeichnet, daß die Betätigungsmittel (2) für die lineare Verlagerung des Gestelles (1) einen vertikalen Zylinder (21) beinhalten, der auf einer Seite der Maschine liegt und dessen Stange (22) mittels eines Hebels (23), der schwenkbar auf einer horizontalen, ortsfesten Achse (14) angeordnet ist, an ein Pleul (25) gekuppelt ist, das seinerseits an dem genannten Gestell (1) angelenkt ist, wobei der Hebel (23) mit einem einstellbaren mechanischen Anschlag (27) zusammenwirkt.

4. Maschine mit ringförmiger Säge zum Trennen von Rohren nach Anspruch 3, dadurch gekennzeichnet, daß der mechanische Anschlag (27) durch einen Getriebemotor mit schrittweiser Betriebsweise (28) einstellbar ist, der auf den genannten Anschlag mittels eines Schrauben-Muttern-Mechanismus (29) und eines Schiebers in Forn eines Keils (30) einwirkt.

5. Maschine mit ringförmiger Säge zum Trennen von Rohren nach Anspruch 3 oder 4, dadurch gekennzeichnet, daß die untere Mantellinie des zu zertrennenden Rohres (31, 32) auf einen konstanten Höhenniveau angeordnet ist, welchen Durchmesser dieses Rohr auch haben mag, wobei der Kurbelzapfen (18) und der mechanische Anschlag (27) dementsprechend eingestellt sind.

**Claims**

1. A ring-blade saw machine for cutting off tubes including an annular saw blade (13) formed by an internally toothed ring adapted to enable the tube to be cut (31) to pass therethrough, and which is capable of movement towards and away from the blade tube, means having a motor (11) and reduction gearing (12) for driving the said annular saw blade (13) in rotation about its own axis (14) and means causing the said annular saw blade (13) to describe a planetary movement around the tube to be cut (31), the annular saw blade (13) and its motor (11) and its reduction gearing (12) for driving it in rotation about its own axis (14) being movably mounted in its plane, by way of guide means (4 to 9), on a frame (1) itself movable linearly under the action of control means (2), in such a way as to bring the teeth of the annular saw blade (13) and the tube to be cut (31) towards or away from one another, the said frame (1) carrying at least one reduction motor (16) driving in rotation at least one adjustable crank arm (18) of which a point (19) remote from its axis of rotation (17) is connected to the movable assembly (10) comprising the annular saw blade (13), its motor (11) and reduction gearing (12) for driving it in rotation about its own axis (14), characterised in that there is provided, for guiding the aforementioned assembly (10) in its plane, first guide means (4, 5, 6) for guidance in a determined direction and second guide means (7, 8, 9) for guidance in a direction perpendicular to the preceding one, and in that a single reduction motor (16) is provided which is associated with a crank arm (19) to enable the assembly (10) to move in these two directions perpendicular to one another.

2. A ring-blade saw machine for cutting off tubes, according to Claim 1, characterised in that the movable assembly (10) including the annular saw blade (13), its motor (11) and its reduction gearing (12) for driving it in rotation about its own axis (14) is slidably mounted, by means of ball-bearing slides, on two horizontal supports (7, 8) the ends of which are themselves slidably mounted, by means of other ball-bearing slides (5, 6), on two vertical supports (4) carried laterally by the frame (1) which carries the reduction motor (16) driving the adjustable crank arm (18) in rotation, the frame (1) being itself vertically movable to move closer together or further apart the teeth of the annular saw blade (13) and the tube to be cut (31).

3. A ring-blade saw for cutting off tubes, according to Claim 2, characterised in that the means (2) for controlling the linear movement of the frame (1) include a vertical ram (21), located on one side of the machine, the piston rod (22) of which is connected, by means of a lever (23) pivotally mounted about a fixed horizontal axis (24), to a link (25) itself articulated on the frame (1), the lever (23) co-operating with an adjustable mechanical abutment (27).

4. A ring-blade saw for cutting off tubes, according to Claim 3, characterised in that the mechanical abutment (27) is adjusted by a reduction stepping motor (28) acting on the said abutment by means of a worm mechanism (29) and a wedge-shaped slide (30).

5. A ring-blade saw machine for cutting off tubes, according to Claim 3 or 4, characterised in that the lower peripheral surface of the tube to be cut (31, 32) is located at a constant level, whatever the diameter of this tube, the crank arm (18) and the mechanical abutment (27) being adjusted as a result.

FIG.1
16
19
18
20
17
15
1
3
3
5
7
9
5
12
11
14
13
10
4
4
21
32
31
6
9
8
6
2
22
26
28
24
25
27

FIG.2
19
18
16
20
17
15
1
3
3
5
7
9
5
12
11
13
14
10
31
4
4
32
21
6
9
8
6
2
22
26
24
28
25
27
23

FIG. 3
1
2
3
3
4
4
5
5
6
6
7
8
9
9
10
11
12
13
14
15
16
17
18
19
20
21
22
23
24
25
26
27
28
31

FIG.4
1
2
3
3
4
4
5
5
6
6
7
8
9
9
10
11
12
13
14
15
16
17
18
19
20
21
22
23
24
25
26
27
28
29
30
31

FIG. 5
19
17
16
18
20
15
1
3
3
5
5
9
7
12
11
13
10
4
4
14
31
21
8
9
6
6
2
22
26
24
25
28
27
23
29
30

FIG.6
19
18
17
16
20
15
1
3
3
5
5
7
9
12
11
13
14
10
31
4
4
21
6
6
9
8
2
22
26
24
25
28
27
23
29

FIG.7
19
16
18
20
17
15
1
3
3
5
5
7
9
12
11
14
13
4
10
4
31
21
6
9
8
6
2
22
26
24
25
28
27
29
30
23